**Europäisches Patentamt**

**European Patent Office**

**Office européen des brevets**

(11) Veröffentlichungsnummer : **0 101 794 B1**

(12) **EUROPÄISCHE PATENTSCHRIFT**

(45) Veröffentlichungstag der Patentschrift :
16.04.86

(51) Int. Cl.⁴ : **F 16 D   3/50**

(21) Anmeldenummer : **83105204.8**

(22) Anmeldetag : **26.05.83**

(54) **Wellenkupplung.**

(30) Priorität : **27.07.82 DE 3227987**

(43) Veröffentlichungstag der Anmeldung :
**07.03.84 Patentblatt 84/10**

(45) Bekanntmachung des Hinweises auf die Patenterteilung : **16.04.86 Patentblatt 86/16**

(84) Benannte Vertragsstaaten :
**AT CH DE FR GB IT LI NL SE**

(56) Entgegenhaltungen :
**GB-A- 1 522 829
US-A- 3 026 692
Prospekt der Firma Dr. J. Heidenhain Gmbh; "Inkremental Drehgeber ROD, Programm 80/81", Seite 55**

(73) Patentinhaber : **Dr. Johannes Heidenhain GmbH
Nansenstrasse 17
D-8225 Traunreut (DE)**

(72) Erfinder : **Ernst, Alfons, Dipl.-Ing.
Traunring 62
D-8225 Traunreut (DE)**

# Beschreibung

Die Erfindung betrifft eine Kupplung zur winkelgenauen Übertragung einer Bewegung zwischen zwei Wellen gemäß dem Oberbegriff des Anspruchs 1.

Eine derartige Kupplung wird beispielsweise zum Anschluß der Welle einer Winkelmeßeinrichtung an eine Spindel einer Werkzeugmaschine verwendet.

Aus dem Prospekt der Firma Dr. Johannes Heidenhain GmbH « Inkrementale Drehgeber ROD, Programme 80/81 » ist auf Seite 55 eine Präzisions-Flachkupplung K15 mit zwei senkrecht zueinander angeordneten Federparallelogrammen bekannt, die eine erste Befestigungsnabe für eine erste Welle und eine zweite Befestigungsnabe für eine zweite Welle mit einem Zwischenstück verbinden. Jede Feder der Federparallelogramme besteht aus zwei Biegegelenken in Form von eingefrästen Nuten und aus einem dazwischenliegenden biegesteifen Abschnitt. Die beiden Federparallelogramme erlauben eine zweidimensionale translatorische Bewegung in der Kupplungsebene senkrecht zu den Wellenachsen, um einen Parallelversatz der beiden Wellen auszugleichen.

Der Erfindung liegt die Aufgabe zugrunde, bei einer derartigen Kupplung eine Feder mit besonders einfacher Ausbildung der Biegegelenke anzugeben.

Diese Aufgabe wird erfindungsgemäß durch die kennzeichnenden Merkmale des Anspruchs 1 gelöst.

Die mit der Erfindung erzielten Vorteile bestehen insbesondere darin, daß die Ausbildung der Federn als Hohlprofile eine schnelle und preisgünstige Herstellung der Biegegelenke durch einen Quetschvorgang mittels eines einfachen Werkzeugs erlaubt ; die vorgeschlagene Feder besitzt gegenüber einer massiven Feder noch den Vorteil eines geringeren Gewichts.

Vorteilhafte Weiterbildungen der Erfindung entnimmt man den Unteransprüchen.

Ein Ausführungsbeispiel der Erfindung wird anhand der Zeichnung näher erläutert.

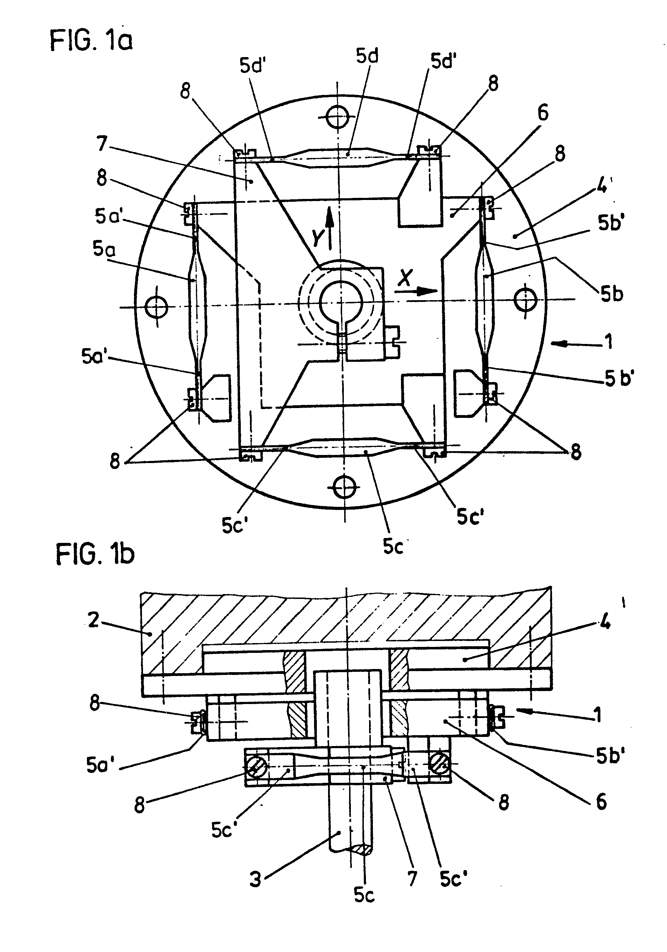

In Figur 1a, b ist in einer Draufsicht und in einem Querschnitt eine Kupplung 1 zur hochgenauen Übertragung einer Winkelbewegung zwischen zwei Wellen 2, 3 gezeigt, die einen Parallelversatz aufweisen können. Die Antriebswelle 2, die beispielsweise mit dem Rundtisch einer nicht gezeigten Werkzeugmaschine verbunden sein kann, ist durch eine nicht dargestellte Schraubverbindung an einer ersten Befestigungsnabe 4 angebracht, die über ein erstes Federparallelogramm 5a, b mit einem Zwischenstück 6 verbunden ist, das seinerseits über ein zweites Federparallelogramm 5c, d mit einer zweiten Befestigungsnabe 7 zum Anschluß der Abtreibswelle 3 verbunden ist, die durch die Welle einer nicht gezeigten Winkelmeßeinrichtung gebildet sein kann.

Die Federn 5a-5d bestehen erfindungsgemäß aus einem Hohlprofil in Form dünnwandiger biegesteifer Metallrohre, die an beiden Enden Biegegelenke in Form von Quetschstellen 5a'-5d' aufweisen, deren Gelenkachsen parallel zu den Wellenachsen verlaufen ; diese Quetschstellen 5a'-5d' dienen gleichzeitig als ebene Befestigungsflächen zum Anbrigen der Federn 5a-d an den Befestigungsnaben 4, 7 und am Zwischenstück 6 mittels Schrauben 8.

Die Biegegelenke 5a', b' des ersten Federparallelogramms 5a, b erlauben dem Zwischenstück 6 eine translatorische Bewegung in X-Richtung bezüglich der ersten Befestigungsnabe 4 und die Biegegelenke 5c', d' des zweiten Federparallelogramms 5c, d der zweiten Befestigungsnabe 7 eine translatorische Bewegung in Y-Richtung bezüglich des Zwischenstücks 6, so daß die vorgeschlagene Kupplung eine zweidimensionale translatorische Bewegung in ihrer Ebene senkrecht zu den Achsen der Welle 2, 3 zuläßt, um einen Parallelversatz zwischen den beiden Wellen 2, 3 auszugleichen.

## Patentansprüche

1. Kupplung zur winkelgenauen Übertragung einer Bewegung zwischen zwei Wellen (2, 3) die parallel zueinander versetzt sind, insbesondere zur Winkeleinstellung oder Winkelmessung, mittels zweier senkrecht zueinander angeordneter Federparallelogramme (5), die eine erste Befestigungsnabe (4) für die erste Welle (2) und eine zweite Befestigungsnabe (7) für die zweite Welle (3) mit einem Zwischenstück (6) verbinden und eine zweidimensionale translatorische Relativbewegung zwischen den Befestigungsnaben (4, 7) in einer Ebene senkrecht zu den Wellenachsen (2, 3) erlauben, wobei jede Feder (5) der Federparallelogramme (5) zwei Biegegelenke (5') mit parallel zu den Wellenachsen (2, 3) verlaufenden Drehachsen aufweist, die durch einen biegesteifen Abschnitt miteinander verbunden sind, dadurch gekennzeichnet, daß die Federn (5) aus einem biegesteifen Hohlprofil bestehen und daß die Biegegelenke (5') durch Quetschstellen des Hohlprofils gebildet sind.

2. Kupplung nach Anspruch 1, dadurch gekennzeichnet, daß die Federn (5) aus einem dünnwandigen biegesteifen Rohr bestehen.

3. Kupplung nach Anspruch 1 und 2, dadurch gekennzeichnet, daß die Quetschstellen (5') der Federn (5) zusätzlich als Befestigungsflächen zum Anbringen der Federn (5) an den Befestigungsnaben (4, 7) und dem Zwischenstück (6) dienen.

## Claims

1. Coupling for the angularly accurate transmission of a movement between two shafts (2, 3) parallel to and offset relative to one another, especially for angle adjustment or angle measurement, by means of two spring parallelograms (5) which are arranged perpendicularly relative to one another and connect a first fastening hub (4) for the first shaft (2) and a second fastening hub (7) for the second shaft (3) to an intermediate piece (6), and which allow a two-dimensional translational relative movement between the fastening hubs (4, 7) in a plane perpendicular relative to the shaft axes (2, 3), each spring (5) of the spring parallelograms (5) possessing two bending joints (5') which have axes of rotation extending parallel to the shaft axes (2, 3) and which are connected to one another by means of a portion resistant to bending, characterised in that the springs (5) consist of a hollow profile resistant to bending, and in that the bending joints (5') are formed by pinched sections of the hollow profile.

2. Coupling according to Claim 1, characterised in that the springs (5) consist of a thin-walled tube resistant to bending.

3. Coupling according to Claims 1 and 2, characterised in that the pinched section (5') of the springs (5) serve additionally as fastening surfaces for attaching the springs (5) to the fastening hubs (4, 7) and to the intermediate piece (6).

**Revendications**

1. Accouplement pour la transmission angulaire exacte d'un déplacement entre deux arbres (2, 3) qui sont décalés parallèlement l'un par rapport à l'autre, en particulier pour le réglage ou la mesure d'angle, au moyen de deux parallélogrammes à ressorts (5) disposés perpendiculairement l'un par rapport à l'autre qui relient un premier moyeu de fixation (4) pour le premier arbre (2) et un second moyeu de fixation (7) pour le second arbre (3) à une pièce intermédiaire (6) et permettent un mouvement de translation relatif bidimensionnel entre les moyeux de fixation (4, 7) dans un plan perpendiculairement aux axes des arbres (2, 3), chaque ressort (5) des parallélogrammes (5) comportant deux joints articulés de flexion (5') à axes de rotation disposés parallèlement aux axes des arbres (2, 3) et mutuellement raccordés par une section rigide à la flexion, caractérisé par le fait que les ressorts (5) sont constitués par un profilé creux rigide à la flexion et que les joints articulés de flexion (5') sont formés par des sections écrasées du profilé creux.

2. Accouplement selon la revendication 1, caractérisé par le fait que les ressorts (5) sont constitués par un tube rigide à la flexion à paroi mince.

3. Accouplement selon les revendications 1 et 2, caractérisé par le fait que les sections écrasées (5') des ressorts (5) servent en plus de surfaces de fixation pour le montage des ressorts (5) sur les moyeux de fixation (4, 7) et la pièce intermédiaire (6).

FIG. 1a

FIG. 1b